# EUROPEAN PATENT SPECIFICATION

(11) **EP 3 542 598 B1**
(45) Date of publication and mention of the grant of the patent: **14.09.2022**
(21) Application number: 17822650.2
(22) Date of filing: 18.12.2017
(51) Int. Cl.: H05B 47/19, H04L 12/28

(54) **COMMISSIONING DEVICE FOR OF ONE OR MORE INSTALLED LIGHTING DEVICES**
KOMMISSIONIERVORRICHTUNG EINER ODER MEHRERER INSTALLIERTER BELEUCHTUNGSVORRICHTUNGEN
DISPOSITIF DE MISE EN SERVICE D'UN OU PLUSIEURS DISPOSITIFS D'ÉCLAIRAGE INSTALLÉS

(30) Priority: 21.12.2016 GB 201622344
(43) Date of publication of application: 25.09.2019
(73) Proprietor: Tridonic GmbH & Co KG, 6851 Dornbirn (AT)
(72) Inventor: BORSOI, Giulio, 6851 Dornbirn (AT); SOMARAJU, Abhinav, 1185 Mont-Sur-Rolle (CH)
(74) Representative: Rupp, Christian
(86) International application number: PCT/EP2017/083298
(87) International publication number: WO 2018/114792

(56) References cited:
- AT-U1- 14 448
- US-A1- 2016 192 458
- Anonymous: "EM358 USB Stick", , 8 October 2016 (2016-10-08), XP055457086, San Diego, USA Retrieved from the Internet: URL:https://web.archive.org/web/2016100822 0914/http://cortet.com/products/cortet-rad io/usb-sticks/thread-usb-sticks/em358-usb- stick#product-tabs1 [retrieved on 2018-03-07]
- Anish Dhanekula: "N2Z, a NFC to ZigBee Transceiver", , 31 December 2012 (2012-12-31), pages 1-47, XP055457062, Austin, USA Retrieved from the Internet: URL:https://repositories.lib.utexas.edu/bi tstream/handle/2152/19995/dhanekula_report _20129.pdf?sequence=1&isAllowed=y [retrieved on 2018-03-07]
- Rick Mclaughlin: "Digi International Announces Thread-Ready XBee Module - Digi International", , 22 February 2016 (2016-02-22), pages 1-4, XP055457065, MINNETONKA, USA Retrieved from the Internet: URL:https://www.digi.com/news/press-releas es/digi-international-announces-thread-rea dy-xbee-mod [retrieved on 2018-03-07]

## Description

The present invention relates to commissioning of one or more installed devices of a lighting system (e.g. lighting d-evices). Particularly, the present invention refers to a communication module, arranged to support an execution of commissioning of one or more installed devices of a lighting network.

When one or more devices (e.g. building technology devices, lighting devices, light emitting diodes (LEDs)) have been installed, their operation has to be evaluated, i.e. a socalled commissioning of the one or more installed devices has to be executed. Particularly, in the commissioning step, it is examined and determined whether the installed devices operate properly and as desired. Here, the operation and the functions of the installed devices are examined.

https://web.archive.org/web/20161008220914/http://cortet.com/pr oducts/cortet-radio/usb-sticks/thread-usb-sticks/em358-usbstick#product-tabsl discloses a communication module suitable for commissioning of a networking system in terms of networking activities by means of protocol decoding.

In this regard, it has to be ensured that commissioning is executed by persons that are entrusted with the commissioning task and that have an allowance to execute the commissioning of the particular installed devices.

This aspect includes also the aspect of a secure communication between the commissioning device and the installed devices. It has to be avoided that any person may get its hands on commands used for the execution of the commissioning and transmitted to the installed devices for the verification of their operation. Thus, a need for more reliable and secure commissioning devices exists.

Thus, the object of the present invention is to enable an improved commissioning of installed devices of a lighting system. Particularly, a more reliable and more secure commissioning of installed devices is desired.

The object of the present invention is solved by features of the independent claims. Dependent claims specify further arrangements of the invention.

The present invention is based on the utilization of the Thread network protocol, which allows a secure and reliable communication between devices.

According to https://en.wikipedia.org/wiki/Thread (network protocol), "Thread" is an IPv6-based, closed-documentation networking protocol for Internet of Things (IoT) "smart" home automation devices to communicate on a local wireless mesh network

Particularly, Thread is a network protocol for reliable, costeffective, low-power, wireless D2D (device-to-device) communication. It has been designed specifically for Connected Home applications where IP-based networking is desired and a variety of application layers can be used on the stack. The use of Thread network protocol has, for example, at least one of the following advantages: Thread allows a simple forming, joining, and maintaining of a Thread communication network; Thread allows secure communication, where devices join the Thread communication network only if they are authorized and where all communications are encrypted and secure; Thread allows efficient communication in both small and large networks; secure and reliable operation is ensured in a Thread communication network even with failure or loss of individual devices; the Thread communication is power saving, i.e. low power communication. By utilizing the Thread communication, the present invention takes over the advantages of the Thread standard with regard to the communication between the commissioning devices/modules and the installed devices. Further, because Thread has been developed for D2D communication, e.g. for devices involved in an Internet of Thigs (IoT) network, the commissioning devices often do not have the capability of being involved into the Thread communication network. Most of the commissioning devices are portable, i.e. mobile commissioning devices (e.g. tablets, mobile phones, smartphones). The idea of the present invention is to allow also such commissioning devices to share the benefits of the Thread communication.

Additionally, for keeping secrecy on the commissioning commands transmitted to installed devices for commissioning purpose, a further communication standard is used that enables a secure data transmission. The further communication standard is a near field communication (NFC) standard.

According to an aspect of the present invention, a lighting communication module is provided that is arranged to support an execution of a commissioning of a plurality of installed devices of a lighting system, wherein the communication module comprises: a first communication interface configured to receive, according to near field communication, NFC, standard, data on one or more commissioning commands; and a second communication interface configured to transmit or broadcast, according to the Thread network protocol, the one or more commissioning commands to the plurality of installed devices of the lighting system, wherein each one of said one or more commissioning commands is arranged to initiate an execution of a respective lighting activity by the plurality of installed devices of the lighting system.

According to an embodiment of the present invention, the data on one or more commissioning commands comprise one or more communication packets arranged according to the Thread network protocol, wherein each one of the one or more communication packets comprises at last one of the one or more commissioning commands; and/or the data on one or more commissioning commands comprises the one or more commissioning commands, and the communication module is configured to generate one or more communication packets according to the Thread network protocol, wherein each one of the one or more communication packets comprises at last one of the one or more commissioning commands; and/or the communication module is configured to generate the one or more commissioning commands by use of the data on the one or more commissioning commands and to generate one or more communication packets according to the Thread network protocol, wherein each one of the one or more communication packets comprises at last one of the one or more commissioning commands.

According to an embodiment of the present invention, the second communication interface is configured to transmit or broadcast the one or more commissioning commands to the plurality of installed devices by transmitting or broadcasting the one or more communication packets to the plurality of installed devices of the lighting system.

According to an embodiment of the present invention, each one of said one or more commissioning commands is arranged to initiate the execution of at least one of the following lighting activities by the one or more lighting devices: dimming; dimming to a predetermined dimming level; change the light color; change the light color to a predetermined light color; change the light temperature; change the light temperature to a predetermined light temperature; blink; blink a predetermined number of times; switch on; switch off.

According to an embodiment of the present invention, the predetermined dimming level, the predetermined light color, the predetermined light temperature, and/or the predetermined number of times is defined by the corresponding commissioning command.

According to an embodiment of the present invention, the second communication interface is configured to receive, according to the Thread network protocol, one or more response messages from the plurality of installed devices of the lighting system in response to the one or more commissioning commands.

According to an embodiment of the present invention, the communication module is arranged for insertion into a commissioning device and/or for connection with the commissioning device.

According to an embodiment of the present invention, the communication module is configured to provide the one or more response messages to a user interface arrangement of the commissioning device.

According to an embodiment of the present invention, the second communication interface is configured to be triggered by a user interface arrangement of the commissioning device to transmit or broadcast the one or more commissioning commands.

The above-described aspects and implementation forms of the present invention will be explained in the following description of specific embodiments in relation to the enclosed drawings, in which
- Fig. 1: visualizes an arrangement of a communication module according to an embodiment of the present invention, an arrangement of a commissioning device not forming part of the invention, and further a communication with installed devices of the lighting system.
- Fig. 2: visualizes an arrangement of a communication packet, arranged according to the Thread network protocol and comprising one or more commissioning commands, according to an embodiment of the present invention.
- Fig. 3: visualizes a further exemplary arrangement of the communication module not forming part of the present invention.

Generally, it has to be noted that all arrangements, devices, modules, components, models, elements, units, entities, and means and so forth described in the present application could be implemented by software or hardware elements or any kind of combination thereof. All steps which are performed by the various entities described in the present application as well as the functionality described to be performed by the various entities are intended to mean that the respective entity is adapted to or configured to perform the respective steps and functionalities. Even if in the following description of the specific embodiments, a specific functionality to be performed by a general entity is not reflected in the description of a specific detailed element of the entity which performs the specific functionality, it should be clear for a skilled person that these functionalities can be implemented in respective hardware or software elements, or any kind of combination thereof. Moreover, any of the embodiments and features of any of the embodiments, described herein, may be combined with each other, as far as a combination falls under the scope of the independent claim.

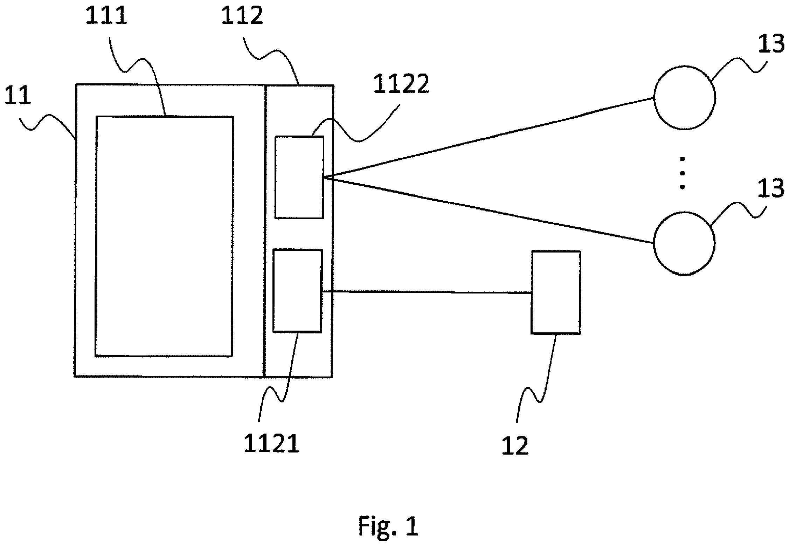

Fig. 1 visualizes an arrangement of a communication module 112 according to an embodiment of the present invention, an arrangement of a commissioning device 11 not forming part of the invention, and further a communication with installed devices 13 of the lighting system.

The commissioning device 11 is configured to execute commissioning of one or more installed devices 13. The one or more installed devices 13 are or comprise, for example, devices of building technology. According to an embodiment the one or more installed devices 13 are or comprise one or more lightning devices such as light emitting diodes (LEDs). The one or more installed devices 13 are configured to communicate by use of the Thread network protocol. Thus, each one of the one or more installed devices 13 is arranged to receive and/or transmit data by use of the Thread network protocol. The data comprises, for example, states of the one or more installed devices 13 and/or commissioning commands to the one or more installed devices 13. Thus, for example, each one of the one or more installed devices 13 is able to transmit data on its state and/or functioning, and/or each one of the one or more installed devices 13 is able to receive commissioning commands. A commissioning command comprises, for example, one or more state changes and/or one or more actions to be executed by the respective installed device 13 receiving the commissioning command. If an installed device 13 is a lighting device, e.g. a LED, a commissioning command is arranged, for example, to initiate the execution of at least one of the following state changes/activities by the lighting device 13: dimming; dimming to a predetermined dimming level; change the light color; change the light color to a predetermined light color; change the light temperature; change the light temperature to a predetermined light temperature; blink; blink a predetermined number of times; switch on; switch off.

The commissioning device 11 is arranged for connecting with the communication module 112. For example, the commissioning device 11 comprises the communication module 112 (e.g., the communication module 112 is insertable into the commissioning device) or the communication module 112 is attachable to the commissioning device 11. Independent of the concrete implementation of the connection of the communication module 112 and the commissioning device 11, the communication module 112 is arranged to enable the commissioning device 11 to communicate with the one or more installed devices 13 via the Thread standard. The commissioning device 11 is, for example, a portable and/or mobile device (e.g. laptop, smartphone, tablet, etc.) that, by communicating with the installed devices 13, detects whether the installed devices 13 have been installed successfully or not.

The communication with the installed devices 13 is to be executed in a secure way. Thus, the verification of the installation of the installed devices 13 should be executed only by commissioning devices 11 and/or communication modules 112 that have been explicitly enabled to perform said verification.

For this purpose, the communication module 112 comprises two communication interfaces 1122, 1121. The first communication interface 1121 is a near field communication (NFC) interface. Via the first communication interface 1121, the communication module receives data on one or more commissioning commands. The data on the one or more commissioning commands is received, for example, from a further communication module or device 12. The further communication module or device 12 is a communication module or device that is configured to transmit data via the NFC connection. The further NFC communication module/device is capable to transmit data in a secure way.

Thus, via the first communication interface 1121, the communication module 112 receives the data on one or more commissioning commands in a secure way.

The second communication interface 1122 is a Thread standard based communication interface. I.e. the second communication interface 1122 is configured to transmit the one or more commissioning commands according to the Thread network protocol (e.g., via the Thread radio).

For example, the second communication interface 1122 is arranged to transmit data packets arranged according to the Thread standard to the one or more installed devices 13. In this case, for example, the following alternatives are possible for implementing the commissioning command communication via the two interfaces 1121, 1122.

According to a first alternative, the data on one or more commissioning commands, received via the first communication interface 1121, i.e. via the NFC connection, represents one or more communication packets arranged according to the Thread network protocol. Each one of the one or more communication packets comprises, for example, at least one of the one or more commissioning commands. In this case, the communication packets as received via the first communication interface 1121 may be transmitted via the second communication interface 1122 to the one or more installed devices 13 for commissioning purposes. Thus, no intermediate processing of commissioning commands by the communication module 112 is mandatory. This increases the processing efficiency at the communication module 112 and at the commissioning device 11 in general.

According to a second alternative, the data on one or more commissioning commands, received via the first interface 1121, represents the one or more commissioning commands. In this case, the communication module 112 is configured to generate one or more communication packets according to the Thread network protocol. Thus, the communication module 112 is arranged to generate one or more communication packets of the

Thread network protocol comprising one or more commissioning commands. In this way, a more flexible communication of commissioning commands is enabled. The communication module 112 is able to transmit commissioning commands as desired and in a desired order. If a transmission of one or more particular commissioning commands is desired, the communication module 112 will generate one or more corresponding communication packets according to the Thread network protocol.

In a third alternative, the communication module 112 is configured to generate to one or more commissioning commands by use of the data on the one or more commissioning commands. Thus, the data on the one or more commissioning commands does not comprise complete commissioning command(s) but parts of the commissioning commands. For example, the data on the one or more commissioning commands indicates the actions (e.g., dimming, light color change, light temperature change) that the installed devices 13 can execute and/or parameters for the actions (e.g., light colors, light temperatures etc.). The communication module 112 uses then the data to generate respective commissioning commands such that each one of the commissioning commands is capable to trigger one or more installed devices 13 to execute one or more respective action(s) included in the commissioning command. Subsequently, the communication module 112 will generate one or more communication packets according to the Thread network protocol, wherein each one or the one or more communication packets comprises one or more generated commissioning commands. In this way, a modular and flexibly arrangable commissioning command generation is supported.

The present invention is capable to support also a combination of two or all of the above-mentioned alternatives for the commissioning command transmission to the installed devices 13 via the second communication interface 1122. In this case, the data on one or more commissioning commands will comprise at least two of the following: one or more communication packets arranged according to the Thread network protocol (first alternative); one or more commissioning commands (second alternative) ; further data on the one or more commissioning commands, said data enabling a generation of the one or more commissioning commands.

When a communication packet, arranged according to the Thread network protocol and to be sent to at least one of the installed devices 13, is present, the second communication interface 1122 transmits the communication packet to the at least one installed device 13.

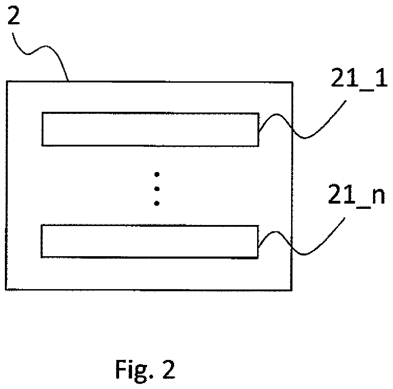

Fig. 2 visualizes an exemplary arrangement of a communication packet 2, arranged according to the Thread network protocol, according to an embodiment of the present invention. According to the present embodiment, the communication packet 2 comprises one or more commissioning commands 21_1, ..., 21_n, wherein n is a positive integer, i.e. n ≥ 1.

The transmission of a communication packet 2 to one or more installed devices 13 causes the one or more installed devices 13 to execute one or more actions indicated by the one or more commissioning commands 21_1, ..., 21_n of the communication packet 2.

If the one or more installed devices 13 are lighting devices, e.g. LEDs, the one or more commissioning commands 21_1, ..., 21_n of a communication packet 2 may trigger the one or more installed devices 13, which received the communication packet 2, to execute at least one of the following activities: dimming (e.g., to an arbitrary level); dimming to a predetermined level (e.g., indicated in the respective commissioning command 21_1, ..., 21_n); change the light color (e.g., to an arbitrary color); change the light color to a predetermined light color (e.g., indicated in the respective commissioning command 21_1, ..., 21_n); change the light temperature (e.g., to an arbitrary light temperature); change the light temperature to a predetermined light temperature (e.g., indicated in the respective commissioning command 21_1, ..., 21_n); blink; blink a predetermined number of times (e.g., indicated in the respective commissioning command 21_1, ..., 21_n); switch on; switch off.

A commissioning command 21_1, ..., 21_n comprises one activity or a sequence of activities to be executed by an installed device 13. According to a further embodiment, the commissioning command 21_1, ..., 21_n indicates for at least one of its activities how long the respective activity should be executed.

Further, the second communication interface 1122 of the communication module 112 is arranged to transmit a communication packet 2 to a particular installed devices 13 (e.g., by indicating an identifier or an address of the particular installed device 13 in the communication packet 2) or to a group of installed devices 13 (e.g., at least two installed devices 13). Thus, the one or more commissioning commands 21_1, ..., 21_n, provided in the communication packet 2, will be executed by the particular installed device 13 of by the group of installed devices 13. In the latter case, the communication packet 2 will comprise, for example, an identifier or an address of the group of installed devices 13 or a set of identifiers or addresses of the installed devices 13 of the respective group.

Additionally, the second communication interface 1122 is arranged to transmit a communication packet 2 without indicating installed devices 13 in the communication packet 2. In this cases, the installed devices 13 that are reachable via the Thread radio will receive the communication packet 2 and will execute the one or more actions indicated by the one or more commissioning commands 21_1, ..., 21_n of the communication packet 2.

According to Fig. 1, the commissioning device 11 comprises besides the communication module 112 also a user interface arrangement 111 that is arranged to visualize information to a user and to receive inputs from the user. The user interface arrangement 111 may be arranged in different appropriate ways. For example, the user interface arrangement 111 comprises at least one of the following: one or more display units, one or more buttons, one or more keys, a keypad etc. A display unit of the user interface arrangement 111 may be arranged, for example, as a touchscreen.

The user interface arrangement 111 is arranged to visualize the installed devices 13. The installed devices 13 may be visualized according to the location of the commissioning device 11. E.g. only installed devices 13 that are in a predetermined proximity of the commissioning device 11 can be visualized by the user interface arrangement 111. Alternatively, all installed devices 13 are visualized by the user interface arrangement 111, and the user has the possibility to zoom in or zoom out in a visualized map/arrangement of installed devices 13 as desired.

By use of the user interface arrangement 111, the user of the commissioning device 11 is capable to indicate one or more installed devices 13, which are subject of commissioning at a given time and to which particular commissioning commands 21_1, ..., 21_n should be sent. The user selects the respective installed devices 13 via the user interface arrangement 111, and the user interface arrangement 111 recognizes the input(s) made by the user and executes a respective selection of installed devices 13. Alternatively, the user may indicate, via the user interface arrangement 111, that all installed devices 13 that are reachable by the commissioning device 11 and particularly by the communication module 112 are subject of commissioning and, thus, should receive the respective commissioning commands 21_1, ..., 21_n. The user interface arrangement 111 will then recognize the corresponding input made by the user and will notice that all reachable installed devices 13 have to receive the commissioning commands 21_1, ..., 21 n.

Further, the user interface arrangement 111 is configured to determine, gather or obtain data on one or more commissioning commands 21_1, ..., 21_n received by the first communication interface 1121. The user interface arrangement 111 visualizes then information on one or more commissioning commands 21_1, ..., 21_n to the user. The user is thus able to select one or more commissioning commands 21_1, ..., 21_n to be transmitted to the installed devices 13. The user interface arrangement 111 recognizes then the one or more commissioning commands 21_1, ..., 21_n selected by the user.

The information on one or more commissioning commands 21_1, ..., 21_n, shown to the user via the user interface arrangement, comprises, for example, names of actions that the installed devices 13 can execute (e.g., dimming, light temperature change, light color change, etc.) and, if available, also parameters of the actions (e.g., dimming level, particular light temperatures, particular light colors, etc.). The user uses then the user interface arrangement to determine one or more commissioning commands to be executed by one or more installed devices. The user can then select one or more actions for a commissioning command and, if possible and desired, also corresponding parameters for the one or more actions.

Thus, the user interface arrangement 111 provides a flexible platform for selecting installed devices 13 that should receive one or more commissioning commands 21_1, ..., 21_n and/or for selecting and/or arranging one or more commissioning commands 21_1, ..., 21_n to be transmitted to the installed devices 13.

The user interface arrangement 111 provides this information to the communication module 112, which then generates, selects and/or arranges one or more corresponding communication packets 2 comprising the respective one or more commissioning commands 21_1, ..., 21_n. Subsequently, the communication module 112 and, particularly, the second communication interface 1122 of the communication module 112 transmits the one or more corresponding communication packets 2 to the one or more installed devices 13.

Thus, the second communication interface 1122 is triggered by the user interface arrangement 111 to transmit the one or more commissioning commands 21_1, ..., 21_n.

According to a further embodiment of the present invention, the communication module 112 is arranged to receive from the one or more installed devices 13 response messages in response to the communication packet transmission. A response message of an installed device 13 comprises, for example, at least one of the following: an indication of a state of the installed device 13; an error information indicating one or more errors that occurred when the installed device 13 executed an action indicated in a commissioning command 21_1, ..., 21_n; and/or an success or failure indication indicating whether the execution of actions indicated in a commissioning command 21_1, ..., 21_n succeeded or failed at the installed device 13.

The response messages are received by the second communication interface 1122 of the communication module 112. Thus, said response messages are transmitted by the one or more installed devices and are received by the second communication interface 1122 according to the Thread network protocol (e.g., via a Thread radio).

The communication module 112 provides, then, the received one or more response messages or the data of the response messages to the user communication interface 111. The user communication interface 111 visualizes the one or more responses of the one or more installed devices 13, which received the commissioning commands 21_1, ..., 21_n to the user, or the data of the one or more responses respectively.

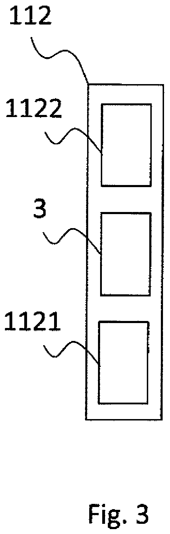

Fig. 3 visualizes a further exemplary arrangement of the communication module 112 not forming part of the present invention. According to Fig. 3, the communication module 112 comprises additionally a processing entity or module 3. The processing entity or module 3 is arranged to execute any one of the steps that are specified herein as being executed by the communication module 112 and that do not concern the transmission and reception processes executed by the first communication interface 1121 and the second communication interface 1122. The processing entity or module 3 comprises one or more processing sub-units. For example, the processing entity or module 3 is configured to generate and/or handle the communication packets 2 to be transmitted via the second communication interface 1122. Additionally, the processing entity or module 3 is configured, for example, to handle the exchange of data between the communication module 112 and the user interface arrangement 111.

Thus, the present invention refers to a communication module 112 arranged to support an execution of a commissioning of one or more installed devices 13, wherein the communication module 112 comprises: a first communication interface 1121 configured to receive, according to near field communication standard, data on one or more commissioning commands 21_1, ..., 21_n; and a second communication interface 1122 configured to transmit, according to Thread network protocol, the one or more commissioning commands 21_1, ..., 21_n to the one or more installed devices 13, wherein each one of said one or more commissioning commands 21_1, ..., 21_n is arranged to initiate an execution of a respective activity by the one or more installed devices 13. Additionally, present disclosure refers to a commissioning device 11 not forming part of the invention and communicating with the one or more installed devices 13 via the communication module 112.

The invention has been described in conjunction with various embodiments herein. However, other variations to the enclosed embodiments can be understood and effected by those skilled in the art and practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

### List of reference signs

- 11: commissioning device
- 111: user interface arrangement
- 112: communication module
- 1121: first communication interface
- 1122: second communication interface
- 12: further communication module/device
- 13: installed device
- 2: communication packet
- 21_1: commissioning command
- 21_n: commissioning command
- 3: processing entity or module

## Claims

1. A communication module (112) for lighting systems, arranged to support an execution of a commissioning of a plurality of installed devices (13) of a lighting system, wherein the communication module (112) comprises:
• a first communication interface (1121) configured to receive data on one or more commissioning commands (21_1, ..., 21_n); and
• a second communication interface (1122) configured to transmit or broadcast, according to Thread network protocol, the one or more commissioning commands (21_1, ..., 21_n)to the plurality of installed devices (13) of the lighting system, wherein each one of said one or more commissioning commands (21_1, ..., 21_n)is arranged to initiate an execution of a respective lighting activity by the plurality of installed devices (13) of the lighting system;
**characterized in that**
the first communication interface (1121) is configured to receive the data according to near field communication standard.

2. The communication module (112) according to claim 1, wherein:
the data on one or more commissioning commands (21_1, ..., 21_n)comprise one or more communication packets (2) arranged according to the Thread network protocol, wherein each one of the one or more communication packets (2) comprises at least one of the one or more commissioning commands (21_1, ..., 21_n); and/or
the data on one or more commissioning commands (21_1, ..., 21_n)comprise one or more commissioning commands (21_1, ..., 21_n), and the communication module (112) is configured to generate one or more communication packets (2) according to the Thread network protocol, wherein each one of the one or more communication packets (2) comprises at least one of the one or more commissioning commands (21_1, ..., 21_n); and/or
the communication module (112) is configured to generate the one or more commissioning commands (21_1, ..., 21_n) by use of the data on the one or more commissioning commands (21_1, ..., 21_n)and to generate one or more communication packets (2) according to the Thread network protocol, wherein each one of the one or more communication packets (2) comprises at least one of the one or more commissioning commands (21_1, ..., 21_n).

3. The communication module (112) according to claim 2, wherein the second communication interface (1122) is configured to transmit or broadcast the one or more commissioning commands (21_1, ..., 21_n)to the plurality of installed devices (13) of the lighting system by transmitting or broadcasting the one or more communication packets (2) to the plurality of installed devices (13) of the lighting system.

4. The communication module (112) according to any one of the preceding claims, wherein, when the plurality of installed devices (13) of the lighting system comprises a plurality of lighting devices, each one of said one or more commissioning commands (21_1, ..., 21_n) is arranged to initiate the execution of at least one of the following lighting activities by the plurality of lighting devices:
dimming;
dimming to a predetermined dimming level;
change the light color;
change the light color to a predetermined light color;
change the light temperature;
change the light temperature to a predetermined light temperature;
blink;
blink a predetermined number of times;
switch on;
switch off.

5. The communication module (112) according to claim 4, wherein the predetermined dimming level, the predetermined light color, the predetermined light temperature, and/or the predetermined number of times is defined by the corresponding commissioning command (21_1, ..., 21_n).

6. The communication module (112) according to any one of the preceding claims, wherein the second communication interface (1122) is configured to receive, according to the Thread network protocol, one or more response messages from the plurality of installed devices (13) of the lighting system in response to the one or more commissioning commands (21_1, ..., 21_n).

7. The communication module (112) according to any one of the preceding claims, wherein the communication module (112) is arranged for insertion into a commissioning device (11) and/or for connection with the commissioning device (11).

8. The communication module (112) according to claim 7, wherein the communication module (112) is configured to provide the one or more response messages to a user interface arrangement (111) of the commissioning device (11).

9. The communication module (112) according to claim 8, wherein the second communication interface (1122) is configured to be triggered by the user interface arrangement (111) of the commissioning device (11) to transmit or broadcast the one or more commissioning commands (21_1, ..., 21_n).

## Patentansprüche

1. Kommunikationsmodul (112) für Beleuchtungssysteme, das angeordnet ist, um eine Ausführung einer Inbetriebnahme einer Vielzahl von installierten Vorrichtungen (13) eines Beleuchtungssystems zu unterstützen, wobei das Kommunikationsmodul (112) umfasst:
• eine erste Kommunikationsschnittstelle (1121), die konfiguriert ist, um Daten auf einem oder mehreren Inbetriebnahmebefehlen (21_1,..., 21_n) zu empfangen; und
• eine zweite Kommunikationsschnittstelle (1122), die konfiguriert ist, um gemäß einem Thread-Netzwerkprotokoll den einen oder die mehreren Inbetriebnahmebefehle (21_1, ..., 21_n) an die Vielzahl von installierten Vorrichtungen (13) des Beleuchtungssystems zu übertragen oder zu senden, wobei jeder des einen oder der mehreren Inbetriebnahmebefehle (21_1, ..., 21_n) angeordnet ist, um eine Ausführung einer jeweiligen Beleuchtungsaktivität durch die Vielzahl von installierten Vorrichtungen (13) des Beleuchtungssystems zu initiieren;
**dadurch gekennzeichnet, dass**
die erste Kommunikationsschnittstelle (1121) konfiguriert ist, um die Daten gemäß einem Nahfeldkommunikationsstandard zu empfangen.

2. Kommunikationsmodul (112) nach Anspruch 1, wobei:
die Daten auf einem oder mehreren Inbetriebnahmebefehlen (21_1, ..., 21_n) ein oder mehrere Kommunikationspakete (2) umfassen, die gemäß dem Thread-Netzwerkprotokoll angeordnet sind, wobei jedes des einen oder der mehreren Kommunikationspakete (2) mindestens einen von dem einen oder den mehreren Inbetriebnahmebefehlen (21_1, ..., 21_n) umfasst; und/oder
die Daten auf einem oder mehreren Inbetriebnahmebefehlen (21_1, ..., 21_n) einen oder mehrere Inbetriebnahmebefehle (21_1, ..., 21_n) umfassen und das Kommunikationsmodul (112) konfiguriert ist, um ein oder mehrere Kommunikationspakete (2) gemäß dem Thread-Netzwerkprotokoll zu erzeugen, wobei jedes des einen oder der mehreren Kommunikationspakete (2) mindestens einen von dem einen oder den mehreren Inbetriebnahmebefehlen (21_1, ..., 21_n) umfasst; und/oder
das Kommunikationsmodul (112) konfiguriert ist, um den einen oder die mehreren Inbetriebnahmebefehle (21_1, ..., 21_n) unter Verwendung der Daten auf dem einen oder den mehreren Inbetriebnahmebefehlen (21_1, ..., 21_n) zu erzeugen und um ein oder mehrere Kommunikationspakete (2) gemäß dem Thread-Netzwerkprotokoll zu erzeugen, wobei jedes des einen oder der mehreren Kommunikationspakete (2) mindestens einen von dem einen oder den mehreren Inbetriebnahmebefehlen (21_1, ..., 21_n) umfasst.

3. Kommunikationsmodul (112) nach Anspruch 2, wobei die zweite Kommunikationsschnittstelle (1122) konfiguriert ist, um den einen oder die mehreren Inbetriebnahmebefehle (21_1, ..., 21_n) durch Übertragen oder Senden des einen oder der mehreren Kommunikationspakete (2) an die Vielzahl von installierten Vorrichtungen (13) des Beleuchtungssystems an die Vielzahl von installierten Vorrichtungen (13) des Beleuchtungssystems zu übertragen oder zu senden.

4. Kommunikationsmodul (112) nach einem der vorstehenden Ansprüche, wobei, wenn die Vielzahl von installierten Vorrichtungen (13) des Beleuchtungssystems eine Vielzahl von Beleuchtungsvorrichtungen umfasst,
jeder des einen oder der mehreren Inbetriebnahmebefehle (21_1, ..., 21_n) angeordnet ist, um die Ausführung mindestens einer der folgenden Beleuchtungsaktivitäten durch die Vielzahl von Beleuchtungsvorrichtungen zu initiieren:
Dimmen;
Dimmen auf einen vorbestimmten Dimmpegel;
Ändern der Lichtfarbe;
Ändern der Lichtfarbe auf eine vorbestimmte Lichtfarbe;
Ändern der Lichttemperatur;
Ändern der Lichttemperatur auf eine vorbestimmte Lichttemperatur;
Blinken;
Blinken zu einer vorbestimmten Anzahl von Malen;
Einschalten;
Ausschalten.

5. Kommunikationsmodul (112) nach Anspruch 4, wobei der vorbestimmte Dimmpegel, die vorbestimmte Lichtfarbe, die vorbestimmte Lichttemperatur und/oder die vorbestimmte Anzahl von Malen durch den entsprechenden Inbetriebnahmebefehl (21_1, ..., 21_n) definiert ist.

6. Kommunikationsmodul (112) nach einem der vorstehenden Ansprüche, wobei die zweite Kommunikationsschnittstelle (1122) konfiguriert ist, um gemäß dem Thread-Netzwerkprotokoll eine oder mehrere Antwortnachrichten von der Vielzahl von installierten Vorrichtungen (13) des Beleuchtungssystems als Reaktion auf den einen oder die mehreren Inbetriebnahmebefehle (21_1, ..., 21_n) zu empfangen.

7. Kommunikationsmodul (112) nach einem der vorstehenden Ansprüche, wobei das Kommunikationsmodul (112) zum Einsetzen in eine Inbetriebnahmevorrichtung (11) und/oder zur Verbindung mit der Inbetriebnahmevorrichtung (11) angeordnet ist.

8. Kommunikationsmodul (112) nach Anspruch 7, wobei das Kommunikationsmodul (112) konfiguriert ist, um die eine oder die mehreren Antwortnachrichten an eine Benutzerschnittstellenanordnung (111) der Inbetriebnahmevorrichtung (11) bereitzustellen.

9. Kommunikationsmodul (112) nach Anspruch 8, wobei die zweite Kommunikationsschnittstelle (1122) konfiguriert ist, um durch die Benutzerschnittstellenanordnung (111) der Inbetriebnahmevorrichtung (11) ausgelöst zu werden, um den einen oder die mehreren Inbetriebnahmebefehle (21_1, ..., 21_n) zu übertragen oder zu senden.

## Revendications

1. Module de communication (112) pour systèmes d'éclairage, agencé pour supporter une exécution d'une mise en service d'une pluralité de dispositifs installés (13) d'un système d'éclairage, dans lequel le module de communication (112) comprend :
• une première interface de communication (1121) configurée pour recevoir des données sur une ou plusieurs commandes de mise en service (21_1, ..., 21_n) ; et
• une deuxième interface de communication (1122) configurée pour transmettre ou diffuser, selon le protocole de réseau Thread, la ou les commandes de mise en service (21_1, ..., 21_n) à la pluralité de dispositifs installés (13) du système d'éclairage, dans lequel chacune desdites une ou plusieurs commandes de mise en service (21_1, ..., 21_n) est agencée pour initier une exécution d'une activité d'éclairage respective par la pluralité de dispositifs installés (13) du système d'éclairage ;
**caractérisé en ce que**
la première interface de communication (1121) est configurée pour recevoir les données selon la norme de communication en champ proche.

2. Module de communication (112) selon la revendication 1, dans lequel :
les données sur une ou plusieurs commandes de mise en service (21_1, ..., 21_n)comprennent un ou plusieurs paquets de communication (2) agencés selon le protocole de réseau Thread, dans lequel chacun du ou des paquets de communication (2) comprend au moins une de la ou des commandes de mise en service (21_1, ..., 21_n) ; et/ou
les données sur une ou plusieurs commandes de mise en service (21_1, ..., 21_n)comprennent une ou plusieurs commandes de mise en service (21_1, ..., 21_n), et le module de communication (112) est configuré pour générer un ou plusieurs paquets de communication (2) selon le protocole de réseau Thread, dans lequel chacun du ou des paquets de communication (2) comprend au moins une de la ou des commandes de mise en service (21_1, ..., 21_n) ; et/ou
le module de communication (112) est configuré pour générer la ou les commandes de mise en service (21_1, ..., 21_n) en utilisant les données sur la ou les commandes de mise en service (21_1, ..., 21_n) et pour générer un ou plusieurs paquets de communication (2) selon le protocole de réseau Thread, dans lequel chacun du ou des paquets de communication (2) comprend au moins une de la ou des commandes de mise en service (21_1, ..., 21_n).

3. Module de communication (112) selon la revendication 2, dans lequel la deuxième interface de communication (1122) est configurée pour transmettre ou diffuser la ou les commandes de mise en service (21_1, ..., 21_n) à la pluralité de dispositifs installés (13) du système d'éclairage en transmettant ou en diffusant le ou les paquets de communication (2) à la pluralité de dispositifs installés (13) du système d'éclairage.

4. Module de communication (112) selon l'une quelconque des revendications précédentes, dans lequel, lorsque la pluralité de dispositifs installés (13) du système d'éclairage comprend une pluralité de dispositifs d'éclairage,
chacune de ladite ou desdites commandes de mise en service (21_1, ..., 21_n) est agencée pour initier l'exécution d'au moins une des activités d'éclairage suivantes par la pluralité de dispositifs d'éclairage :
gradation ;
gradation à un niveau de gradation prédéterminé ;
changement de couleur de la lumière ;
changement de couleur de la lumière à une couleur de lumière prédéterminée ;
changement de température de la lumière ;
changement de température de la lumière à une température de lumière prédéterminée ;
clignotement ;
clignotement un nombre de fois prédéterminé ;
allumage ;
coupure.

5. Module de communication (112) selon la revendication 4, dans lequel le niveau de gradation prédéterminé, la couleur de lumière prédéterminée, la température de lumière prédéterminée, et/ou le nombre de fois prédéterminé est défini par la commande de mise en service correspondante (21_1,..., 21_n).

6. Module de communication (112) selon l'une quelconque des revendications précédentes, dans lequel la deuxième interface de communication (1122) est configurée pour recevoir, selon le protocole de réseau Thread, un ou plusieurs messages de réponse à partir de la pluralité de dispositifs installés (13) du système d'éclairage en réponse à la ou aux commandes de mise en service (21_1,..., 21_n).

7. Module de communication (112) selon l'une quelconque des revendications précédentes, dans lequel le module de communication (112) est agencé pour s'insérer dans un dispositif de mise en service (11) et/ou pour se connecter au dispositif de mise en service (11).

8. Module de communication (112) selon la revendication 7, dans lequel le module de communication (112) est configuré pour fournir le ou les messages de réponse à un agencement d'interface utilisateur (111) du dispositif de mise en service (11).

9. Module de communication (112) selon la revendication 8, dans lequel la deuxième interface de communication (1122) est configurée pour être déclenchée par l'agencement d'interface utilisateur (111) du dispositif de mise en service (11) pour transmettre ou diffuser la ou les commandes de mise en service (21_1, ..., 21_n).
